(19) Europäisches Patentamt / European Patent Office / Office européen des brevets

(11) **EP 3 102 083 B1**

(12) **EUROPEAN PATENT SPECIFICATION**

(45) Date of publication and mention
of the grant of the patent:
**26.06.2019   Bulletin 2019/26**

(21) Application number: **15705738.1**

(22) Date of filing: **28.01.2015**

(51) Int Cl.:
**A47L 13/17** *(2006.01)*

(86) International application number:
**PCT/US2015/013194**

(87) International publication number:
**WO 2015/119810 (13.08.2015 Gazette 2015/32)**

(54) **CLEANING SHEET AND LAMINATES THEREFOR**

REINIGUNGSTUCH UND BESCHICHTUNG DAFÜR

CHIFFON DE NETTOYAGE ET REVÊTEMENT POUR CELUI-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **07.02.2014   US 201414175190**

(43) Date of publication of application:
**14.12.2016   Bulletin 2016/50**

(73) Proprietor: **The Procter & Gamble Company
Cincinnati, OH 45202 (US)**

(72) Inventors:
 • **DOHERTY-STAPP, Stephanie, Michelle
Cincinnati, Ohio 45202 (US)**
 • **HOYING, David, John
Cincinnati, Ohio 45202 (US)**
 • **FLORES-ESCRIBANO, Juan, Carlos
Cincinnati, Ohio 45202 (US)**
 • **PUNG, David, John
Cincinnati, Ohio 45202 (US)**

(74) Representative: **Siddiquee, Sanaul Kabir
N.V. Procter & Gamble
Services Company S.A.
Temselaan 100
1853 Strombeek-Bever (BE)**

(56) References cited:
**WO-A1-2008/156454      WO-A1-2009/031951
US-A1- 2003 216 272      US-A1- 2005 148 262**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The present invention relates to cleaning sheets, and more particularly to substrates for cleaning sheets which may be pre-wetted prior to use.

BACKGROUND OF THE INVENTION

Hard surface cleaning sheets are well known in the art. Such sheets may be used on the floor, countertop, tables, etc. The discussion below is directed to floor sheets, but the invention is not so limited.

Such sheets may be used dry, to gather dust, crumbs, dirt, hair, etc. Such sheets may also be used with liquids, to help solubilize some debris on the floor. The liquid may be separately applied, as occurs with a separate spray system. Such a spray system may use an on-board reservoir. The reservoir may be refilled or replaced when depleted. An example is found in the Swiffer R WetJet R implement, sold by the instant assignee. Alternatively or additionally, the sheet may be pre-wetted as presented to the consumer. Such sheets may be lightly moistened, completely saturated or have any moisture level therebetween. A commercially successful pre-wetted sheet has been made under commonly assigned US 6716805 and sold by the instant assignee as Swiffer ® Sweeper Wet Cloth refills.

The pre-wetted floor sheets may provide convenience to the consumer. Separate supplies for wetting the floor, or other surface, are not necessary. The sheet may be pre-wetted with a liquid particularly suited for the desired task.

Such floor sheets may comprise a single ply or a laminate of two or more plies. The laminated arrangement increases production costs, but provides the benefit that different layers can be customized for different uses. For example, a floor contacting layer may be suited to dirt removal. A core layer may be suited for holding and releasing the liquid. An optional backing layer may be suited for removably joining the floor sheet to an optional cleaning implement.

Maintaining a relatively low cost for the cleaning sheets may be desirable. One way manufacturers have tried to economize, is to use relatively lower basis weight materials and/or to use relatively lower density weight materials. An example of low density substrates may be found in US 20070202766/7947613.

WO 2009/031951 A1 describes a sheet of wiping material having a first outer surface and a second outer surface and a core region between the surfaces, the wiping material comprising absorbent fibres and non- absorbent fibres. The wiping material has a stratified structure with a fibre gradient and a higher ratio of absorbent fibres to non-absorbent fibres at the outer surfaces of the wiping material than in the core region.

But conserving materials to reduce costs may have tradeoffs. For example, if the cleaning sheet is used as a floor sheet, the floor sheet having reduced basis weight may not clean enough area to complete the task in a single room. The user is inconvenienced by having to change to a new floor sheet during the cleaning task. The area a single sheet can clean under controlled conditions is herein referred to as 'mileage.'

Increasing the liquid loading level may not overcome this problem. The greater basis weight may not be sufficient to hold the increased amount of liquid. Furthermore, increasing the amount of liquid offsets the cost savings sought by conserving materials in the laminate.

Accordingly, an approach is desired which reduces costs, preferentially reduces materials sent to landfill yet still provides adequate cleaning mileage for the user. But to do so one must decouple the related properties of basis weight and cleaning mileage.

SUMMARY OF THE INVENTION

The invention comprises a cleaning sheet, suitable for being pre-wetted before being presented to a user. The cleaning sheet comprises a first ply and a second ply joined together in a face-to-face relationship to form a laminate. The first ply is a floor layer having a basis weight of from about 35 gsm to about 50 gsm, and a cumulative volume at 204 mm $H_2O$ of about 2 to about 2.7 cubic millimeters per mg of nonwoven material. The second ply is a core layer for holding and releasing a cleaning liquid and comprises a synthetic and/or cellulosic material.

BRIEF DESCRIPTION OF THE DRAWINGS

Fig. 1A is a top plan view, shown partially in cutaway, of an exemplary floor sheet according to the present invention.
Fig. 1B is a fragmentary, exploded schematic vertical sectional view taken along lines 1B-1B of Fig. 1A.
Figs. 2A - 4B show various attributes of single ply nonwoven materials, usable as a floor layer in cleaning sheet according to the present invention.

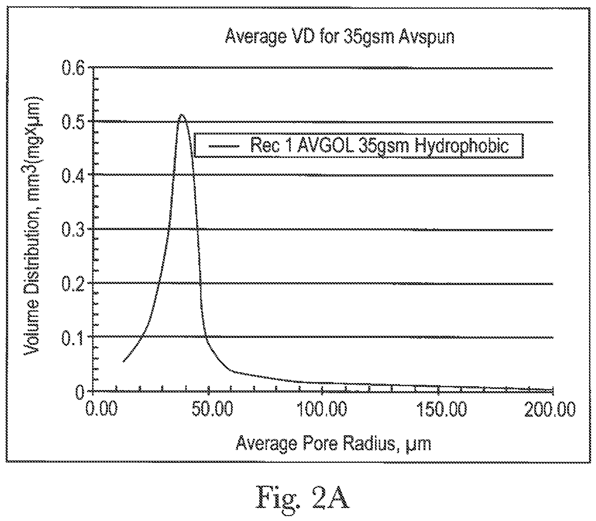

Figs. 2A - 2B are representative pore volume distributions for commercially available nonwovens.

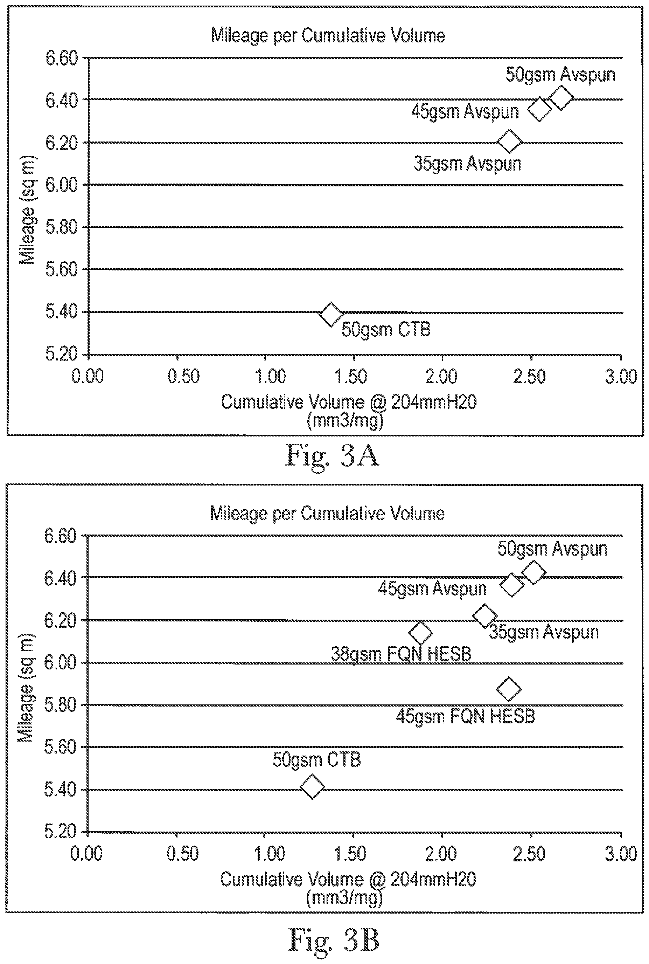

Fig. 3A graphically shows performances of various basis weights of representative spunbond hydroentangled nonwovens and a representative carded thermal bond nonwoven.

Fig. 3B graphically shows the performances of the nonwovens of Fig. 3A, juxtaposed with the performance of additional hydroentangled nonwovens.

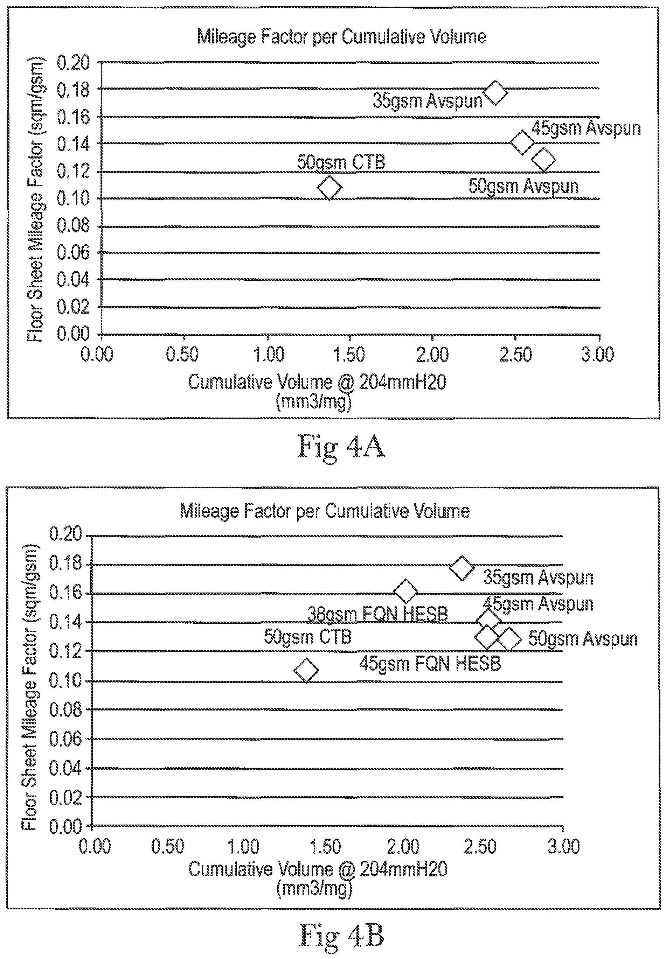

Figs. 4A graphically shows performances of various basis weights of representative hydroentangled spunbond nonwovens and a representative carded thermal bond nonwoven, having been normalized to consider the basis weight.

Fig. 4B graphically shows representative performances of the nonwovens of Fig. 4A, juxtaposed with the performance of additional hydroentangled nonwovens, again having been normalized to consider the basis weight.

## DETAILED DESCRIPTION OF THE INVENTION

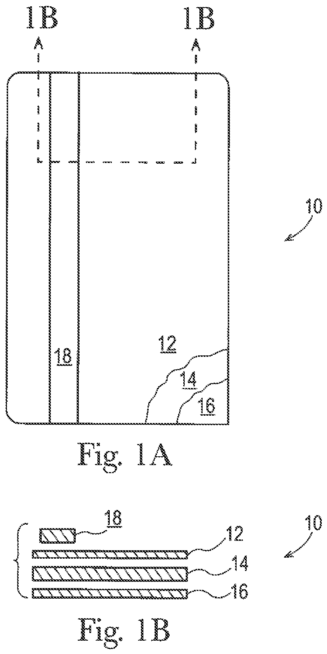

Referring to Figs. 1A - 1B, a cleaning sheet (10) according to the present invention may comprise two, three or more plies. The plies may be joined together in a face-to-face relationship to form a laminate. A first ply may be a floor contacting layer (12).

If desired, the cleaning sheet (10) may be pre-moistened/pre-wetted [the terms being used interchangeably herein]. If the cleaning sheet (10) is pre-moistened, it is preferably pre-moistened with a liquid which provides for cleaning of the target surface, such as a floor, but yet does not require a post-cleaning rinsing operation. The cleaning sheet (10) may have the liquid added during manufacture or after the sheets are placed in a liquid impermeable container.

The pre-moistened cleaning sheet (10) may comprise natural or synthetic fibers. The fibers may be hydrophilic, hydrophobic or a combination thereof, provided that the cleaning sheet (10) is generally absorbent to hold, and express upon demand, a cleaning solution. In one embodiment, the cleaning sheet (10) may comprise at least 50 weight percent or at least 70 weight percent cellulose fibers, such as air laid SSK fibers. If desired, the cleaning sheet (10) may comprise plural layers to provide for scrubbing, liquid storage, and other particularized tasks for the cleaning operation.

Examining the invention in more detail, the floor layer (12) may comprise a hydroentangled spun bond [HESB] nonwoven. A spunbond nonwoven comprises sheet materials in which fibers are extruded in molten state through fine capillaries of a spinneret. The extruded fibers may be quenched and deposited onto a collecting surface. The fibers may be generally continuous with a denier ranging from 0.3 to 10 grams per 9000 meters. A particularly suitable denier range for the present invention is from 1 to 4, particularly 1.7 grams per 9000 meters. Spunbond fibers may be made according to US 3341394; 3502358; 3802817 and/or 4340563.

A hydroentangled nonwoven comprises sheet materials in which fibers can be wet laid or dry laid onto a forming screen. The forming screen may be textured, to provide a dimensional texture to a macroscopically monoplanar web or may be flat. The fibers can be entangled together by fine water jets directed towards the web. The nonwoven sheet is then dried.

The floor layer (12) may have a basis weight of 20 to 60 gsm, or 30 to 50 gsm, and particularly 35 gsm. Suitable nonwoven suppliers include Suominen of Helsinki, Finland and Avgol Nonwovens of Tel-Aviv, Israel.

The core layer (12) may comprise an airlaid. The airlaid may be multi-bonded, i.e. comprising both adhesive and/or thermal bonds to hold the fibers together in a cohesive layer. The core layer (12) may comprise both naturally occurring cellulose and synthetic fibers. The optional cellulose component of the core may comprise wood pulp, particularly = soft wood, hard wood, CTMP, eucalyptus. The optional synthetic component of the core may comprise PP, PE, PET or other polyolefinic fibers. The fibers may be bicomponent, comprising a PE sheath and PET core. The synthetic fibers may have a nominal length of less than 6 mm or 3 mm or less. The core may comprise 80 to 90 weight percent cellulosic fibers and balance synthetic fibers.

The core layer (12) may comprise a latex binder. The binder may comprise 1 to 4 or 2 to 3 weight percent latex binder. The core may have a basis weight of 100 to 170, 110 to 160 or 120 to 140 gsm.

The optional backing layer (16) may comprise carded thermal bond [CTB] or [HESB] nonwoven materials. The nonwoven may be made of PE, PP, PET, Rayon, etc. and have a basis weight of of 20 to 60 gsm, 30 to 50 gsm, and particularly 35 gsm.

In a degenerate case, the cleaning sheet (10) may use identical materials for the floor layer (12) and backing layer (16). This arrangement provides for manufacturing efficiency and economy of scale.

The plies of the cleaning sheet (10) may be laminated together using dynamic mechanical bonding. In such a process, two or more rolls may be juxtaposed together to form a nip therebetween. Either or both rolls may have nubs which act against nubs or face of the opposing roll. The plies are fed through the nip and optionally autogenously joined by pressure between the nubs. The rolls may be operated at equal or unequal surface velocities. The two or more plies may be joined according to commonly assigned US 4919738; US 6733605 and EP 0844062.

Referring back to the aforementioned US 20070202766/7947613, the art teaches cumulative volume as a function of increasing pore radius [Figs. 1 - 6]. But this teaching falls short of commercial feasibility if the desired pore radius is not commercially available.

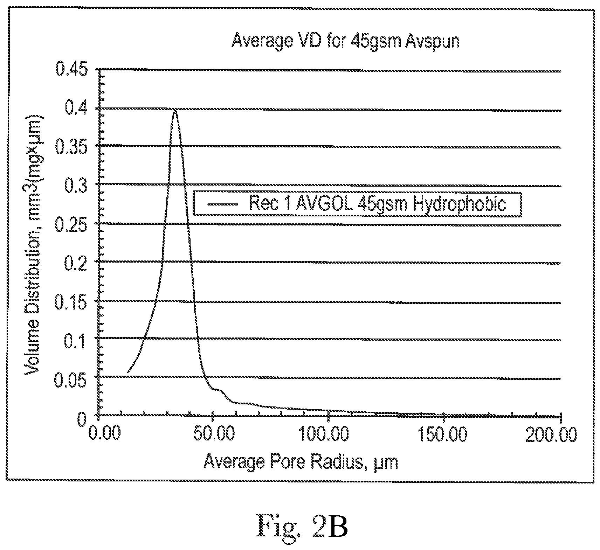

For example and referring to Figs. 2A - 2B, pore radius for two illustrative and suitable commercially available Avspun nonwovens, available from Avgol are shown. Fig. 2A shows a pore radius clustered around 40 microns for a 35 gsm HESB. Fig. 2B shows a pore radius clustered around 35 microns for a 45 gsm HESB. One of skill, seeking to use the teachings of the prior art may not be able to do so, in a cost effective manner - due to lack of commercial availability of the desired materials. Another approach is needed.

Figs. 3A and 4A show HESB materials from a single vendor, Avgol [labeled Avspun]. For proof of principle of the invention described and claimed herein, Figs. 3B and 4B show the same information as Figs. 3A and 4A, and further consider a second vendor, First Quality Nonwovens [labeled FQN HESB]. Carded thermal bond material from Suominen [labeled CTB] is shown as a single datum point.

Referring to Fig. 3A, it is seen that cleaning mileage generally increases as a function of basis weight, particularly when carded thermal bond [CTB] materials are not considered. Cleaning mileage is determined by mopping a pre-determined test floor area with constant strokes under increasing pressures, until the floor sheet expresses less than 0.3 grams fluid loss per 0.3 square meters.

Referring to Fig. 3B, it is seen that the Avspun materials generally outperform FQN HESB materials at constant basis weight. Thus referring to the prior art and Figs. 3A - 3B, one of skill trying to decouple cost [basis weight] and cleaning performance [mileage] would seek to use higher basis weight material [sacrificing cost] or seek to use particular pore volumes [of unknown performance and commercial availablility]. Yet another approach is needed.

Referring to Figs. 4A - 4B, another approach, not found in the cited prior art, is shown. Fig. 4A shows that when the cleaning performance is normalized for basis weight, the 35 gsm nonwoven unexpectedly outperforms the 45 gsm nonwoven. This finding is particularly unexpected, as the 45 gsm nonwoven has 28% more material than the 35 gsm material. Looking further at Fig. 4A, it is seen that the 35 gsm nonwoven even unexpectedly outperforms the 50 gsm nonwoven having 43% more material.

Looking further at Fig. 4B it is further unexpectedly shown that FQN HESB materials perform, on a normalized basis, comparable to or with slightly less efficacy than Avspun materials having similar, if not more, basis weight/cost. For example, the 45 gsm FQN HESB and 45 gsm Avspun materials have similar normalized mileage. This mileage is unexpectedly comparable to the 50 gsm Avspun mileage. Evenmore unexpected, the 38 gsm FQN HESB and 35 gsm Avspun materials exhibit even greater performance on a normalized basis. Such results are not predicted by the art.

Thus, considering Figs. 3B and 4B in combination may produce that performance improvements may not be recognized by searching for and selecting a particular supplier. Yet another approach is needed.

Thus one of skill, seeking to reduce cost, without sacrificing performance, may use a spun bond or particularly a hydroentangled spunbond nonwoven material for the floor layer (12) of a cleaning sheet (10). One of skill might not use a carded thermal bond nonwoven material.

Likewise, one of skill might select a nonwoven material having a cumulative volume at 204 mm $H_2O$ [0.3 psi] of 2 - 2.7, 2.3 - 2.5 or 2.3 cubic millimeters per mg of nonwoven material. The nonwoven may have a basis weight of 25 to 60 gsm, 35 - 50 gsm or 38 - 45 gsm.

The cleaning sheet (10) may be loaded with at least 3 - 4, particularly 6 - 8 grams of cleaning solution per gram of dry substrate, but typically not more than 10 grams per gram. The cleaning solution may comprise a surfactant, such as APG surfactant which minimizes streaking since there is typically not a rinsing operation during floor cleaning. The cleaning solution may contain agglomerating chemicals, disinfectants, bleaching solutions, perfumes, secondary surfactants etc. A suitable pre-moistened cleaning sheet (10) maybe made according to the teachings of commonly assigned US patents 6,716,805; D614,408; D629,211 and/or D652,633.

One of skill is commonly aware that CTB nonwovens are generally more expensive than comparable spunbond nonwovens. And it would be expected that a higher basis weight nonwoven would perform better than a less expensive and lower basis weight nonwoven. But the inventors have unexpectedly found based upon the available data, that using a relatively low basis weight nonwoven unexpectedly allows reduced cost and improved performance. The inventors have further unexpectedly found, based upon the available data, that less expensive spunbond materials exhibit better performance than more expensive carded thermal bond nonwovens. Both of these results are unexpected.

Cumulative Pore Volume Test Method

The following test method is conducted on samples that have been conditioned at a temperature of 23° C ± 2.0° C and a relative humidity of 45% ± 10% for a minimum of 12 hours prior to the test. All tests are conducted under the same environmental conditions and in such conditioned room. Discard any damaged product. Do not test samples that have defects such as wrinkles, tears, holes, and like. All instruments are calibrated according to manufacturer's specifications. Samples conditioned as described herein are considered dry samples (such as "dry fibrous sheet") for purposes of this invention. At least four samples are measured for any given material being tested, and the results from those four replicates are averaged to give the final reported value. Each of the four replicate samples has dimensions of 55 mm x 55 mm.

One of skill understands that obtaining a suitable sample of ply from an article comprising multiple ply sheets and/or cleaning solution will involve several preparation steps, which may include the removal of all cleaning fluid and the separation of the various ply sheets from each other and from other components of the finished article. Furthermore, one of skill understands it is important to ensure the preparation does not damage the ply being tested or alter the measured pore volume characteristics.

Pore volume measurements are made on a TRI/Autoporosimeter (Textile Research Institute (TRI) / Princeton Inc. of Princeton, N.J., U.S.A.). The TRI/Autoporosimeter is an automated computer-controlled instrument for measuring pore volume distributions in porous materials (e.g., the volumes of different size pores within the range from 1 to 1000 $\mu$m effective pore radii). Computer programs such as Automated Instrument Software Releases 2000.1 or 2003.1/2005.1; or Data Treatment Software Release 2000.1 (available from TRI Princeton Inc.), and spreadsheet programs are used to capture and analyse the measured data. More information on the TRI/Autoporosimeter, its operation and data treatments can be found in the paper: "Liquid Porosimetry: New Methodology and Applications" by B. Miller and I. Tyomkin published in The Journal of Colloid and Interface Science (1994), volume 162, pages 163-170, incorporated here by reference.

As used in this application, porosimetry involves recording the increment of liquid that enters or leaves a porous material as the surrounding air pressure changes. A sample in the test chamber is exposed to precisely controlled changes in air pressure. As the air pressure increases or decreases, different size pore groups drain or absorb liquid. Pore-size distribution or pore volume distribution (PVD) can further be determined as the distribution of the volume of uptake of each pore-size group, as measured by the instrument at the corresponding pressure. The pore volume of each group is equal to this amount of liquid, as measured by the instrument at the corresponding air pressure. Total cumulative fluid uptake is determined as the total cumulative volume of fluid absorbed. The effective radius of a pore is related to the pressure differential by the relationship:

$$\text{Pressure differential} = [(2)\,\gamma \cos \Theta] \,/\, \text{effective radius}$$

where $\gamma$ = liquid surface tension, and $\Theta$ = contact angle.

This method uses the above equation to calculate effective pore radii based on the constants and equipment controlled pressures.

The automated equipment operates by changing the test chamber air pressure in user-specified increments, either by decreasing pressure (increasing pore size) to absorb liquid, or increasing pressure (decreasing pore size) to drain liquid. The liquid volume absorbed or drained at each pressure increment is the cumulative volume for the group of all pores between the preceding pressure setting and the current setting. The TRI/Autoporosimeter reports the pore volume contribution to the total pore volume of the specimen, and also reports the volume and weight at given pressures and effective radii. Pressure-volume curves can be constructed directly from these data and the curves are also commonly used to describe or characterize the porous media.

For purposes herein, the TRI/Autoporosimeter, uses a liquid having 0.1 weight % solution of octylphenoxy polyethoxy ethanol (Triton X-100, a non-ionic surfactant available from Union Carbide Chemical and Plastics Co. of Danbury, Conn.) in distilled water. The instrument settings and constants used are: $\rho$ (density)=1 g/cm3; $\gamma$ (surface tension)=30 dynes/cm2 and cos $\Theta$=1°. A 9 mm diameter, 1.20 $\mu$m pore size Millipore mixed cellulose filter (Millipore Corporation of Bedford, Mass.; Catalog # RAWP09025) is employed on the test chamber's porous plate. Other instrument settings include: The Maximum Sample Thickness is set to 1.5 mm; Save Kinetics is set to Yes; Chamber Height is set to 6.4 mm plate; Thickness Measurement is set to Yes; Number of cycles is 1; Intervals is set to 30 sec.; equilibrium balance or limit balance rate is set at 15 mg/minute. No stop radius is specified;

A blank condition (no sample between plexiglass plate and Millipore Filter) is run to account for any surface and/or edge effects within the test chamber. Any pore volume measured for this blank run is subtracted from the applicable pore grouping of the test sample. For the test samples, a 4 cm x 4 cm plexiglass plate weighing about 32 g (supplied with the instrument) is placed on the sample to ensure the sample rests flat on the Millipore filter during measurement. No additional weight is placed on the sample. The sequence of pressures to be run in the test, in mm $H_2O$ is as follows: 613, 61, 47, 38, 32, 26, 20, 8, 10, 12, 15, 20, 31, 34, 38, 44, 51, 61, 68, 77, 88, 94, 102, 111, 123, 136, 153, 175, 204, 245, 306, 408, and 613.

These pressure values are used to produce the Advancing 1 and Receding 1 curves. This sequence starts with the sample dry, saturates it as the pressure decreases (i.e., Advancing 1 curve), and then subsequently drains the fluid out as the pressure increases again (i.e., Receding 1 curve).

The TRI/Autoporosimeter measures the cumulative weight (mg) of liquid at each pressure level, and reports the respective cumulative pore volume of the sample. From these data and the weight of the original dry sample, the ratio of cumulative pore volume/sample weight can be calculated at any measured pressure level, and reported in $mm^3/mg$. In the case of this test method, the cumulative pore volume is determined at the pressure of 204 mm $H_2O$ during the Receding 1 curve, and is reported in $mm^3/mg$ and taken from the TRI instrument.

Optionally, the pre-moistened cleaning sheet (10) may further comprise a scrubbing strip (18). A scrubbing strip (18) is a portion of the cleaning sheet (10) which provides for more aggressive cleaning of the target surface. A suitable scrubbing strip (18) may comprise a polyolefinic film, such as LDPE, and have outwardly extending perforations, etc. The scrubbing strip (18) may be made and used according to commonly assigned US patents 8,250,700; 8,407,848; D551,409 S and/or D614,408 S.

The cleaning sheet (10) according to the present invention may be used with a stick-type cleaning implement [not shown]. The cleaning implement may comprise a head for holding the cleaning sheet (10) and an elongate handle articulably connected thereto. The handle may comprise a metal or plastic tube or solid rod.

The head may have a downwardly facing surface, to which the sheet may be attached. The downwardly facing service may be generally flat, or slightly convex. The head may further have an upwardly facing surface. The upwardly facing surface may have a universal joint to facilitate connection of the elongate handle to the head.

The upwardly facing surface may further comprise a mechanism, such as resilient grippers, for removably attaching the cleaning sheet (10) to the implement. Alternatively, a hook and loop system may be used to attach the cleaning sheet (10) to the head. If grippers are used with the cleaning implement, the grippers may be made according to commonly assigned US patents 6,305,046; 6,484,346; 6,651,290 and/or D487,173.

If desired, the cleaning implement may have an axially rotatable beater bar and/or vacuum type suction to assist in removal of debris from the target surface. Debris removed from the target surface may be collected in a dust bin. The dust bin may be mounted within the head, or, alternatively, on the elongate handle.

A suitable stick-type cleaning implement may be made according to commonly assigned US patents Des. 391,715; D409,343; D423,742; D481,184; D484,287; D484,287 and/or D588,770. A suitable vacuum type cleaning implement may be made according to the teachings of US patents 7,137,169, D484,287 S, D615,260 S and D615,378 S. A motorized implement may be made according to commonly assigned US patent 7,516,508. The implement may utilize steam for cleaning according to jointly assigned US publication 2013/0319463.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

Every document cited herein, including any cross referenced or related patent or application, is hereby incorporated herein by reference in its entirety unless expressly excluded or otherwise limited. The citation of any document is not an admission that it is prior art with respect to any invention disclosed or claimed herein or that it alone, or in any combination with any other reference or references, teaches, suggests or discloses any such invention. Further, to the extent that any meaning or definition of a term in this document conflicts with any meaning or definition of the same term in a document incorporated by reference, the meaning or definition assigned to that term in this document shall govern.

While particular embodiments of the present invention have been illustrated and described, it would be obvious to those skilled in the art that various other changes and modifications can be made without departing from the spirit and scope of the invention. It is therefore intended to cover in the appended claims all such changes and modifications that are within the scope of this invention.

**Claims**

1. A cleaning sheet (10) suitable for being pre-wetted, said cleaning sheet (10) comprising a first ply and a second ply joined together in a face-to-face relationship to form a laminate, said first ply comprising a floor contacting layer (12), said second ply comprising a synthetic nonwoven and/or cellulosic material providing a core layer for holding and releasing a cleaning liquid, said first ply having a basis weight of 35 gsm to 50 gsm, **characterized by** a cumulative volume at 204 mm $H_2O$ of 2 to 2.7 cubic millimeters per mg of nonwoven material.

2. The cleaning sheet (10) of claim 1, wherein said second ply has a first face and a second face opposed thereto, and wherein said floor contacting layer (12) is disposed on said first face of said second ply, and wherein said sheet further comprises a third ply backing layer (16) disposed on said second face of said second ply to form a three ply laminate.

3. The cleaning sheet (10) of claims 1 and 2 wherein said floor contacting layer (12) comprises a spunbond nonwoven.

4. The cleaning sheet (10) of claim 3 wherein said floor contacting layer (12) comprises a hydroentangled spunbond nonwoven.

5. The cleaning sheet (10) of any preceding claim wherein said basis weight of said floor contacting layer (12) is 38 gsm to 45 gsm.

6. The cleaning sheet (10) of any preceding claim **characterized in that** cumulative volume of said floor contacting layer (12) at 204 mm $H_2O$ is 2.3 to 2.5 cubic millimeters per mg of nonwoven material.

7. The cleaning sheet (10) of claims 1, 2, 3, 4 and 5 **characterized in that** said first ply has a cumulative volume at 204 mm $H_2O$ of 2.5 to 2.7 cubic millimeters per mg of nonwoven material.

8. The cleaning sheet (10) of any preceding claim wherein said second ply has a basis weight of 110 gsm to 160 gsm.

9. The cleaning sheet (10) of claims 2, 3, 4, 5, 6, 7 and 8 wherein said floor contacting layer (12) and said backing layer (16) comprise substantially identical nonwoven materials.

10. The cleaning sheet (10) of any preceding claim wherein said second ply comprises at least 50 weight percent cellulose.

11. A cleaning sheet (10) according to any preceding claim which is pre-wetted.


**Patentansprüche**

1. Reinigungstuch (10), das geeignet ist, vorbefeuchtet zu werden, wobei das Reinigungstuch (10) eine erste Lage und eine zweite Lage umfasst, die miteinander in einer einander zugewandten Beziehung zu einem Laminat zusammengefügt sind, wobei die erste Lage eine Bodenkontaktschicht (12) umfasst, wobei die zweite Lage ein synthetisches Vlies- und/oder Cellulosematerial umfasst, das eine Kernschicht zum Halten und Freigeben einer Reinigungsflüssigkeit bereitstellt, wobei die erste Lage ein Basisgewicht von 35 g/m2 bis 50 g/m2 aufweist, **gekennzeichnet durch** ein kumulatives Volumen bei 204 mm $H_2O$ von 2 bis 2,7 Kubikmillimeter pro mg Vliesmaterial.

2. Reinigungstuch (10) nach Anspruch 1, wobei die zweite Lage eine erste Fläche und eine dieser gegenüberliegende zweite Fläche aufweist und wobei die Bodenkontaktschicht (12) auf der ersten Fläche der zweiten Lage angeordnet ist und wobei das Tuch ferner eine dritte Lagenstützschicht (16) umfasst, die auf der zweiten Fläche der zweiten Lage angeordnet ist, um ein dreilagiges Laminat zu bilden.

3. Reinigungstuch (10) nach Ansprüchen 1 und 2, wobei die Bodenkontaktschicht (12) ein Spinnvlies umfasst.

4. Reinigungstuch (10) nach Anspruch 3, wobei die Bodenkontaktschicht (12) ein wasserstrahlverfestigtes Spinnvlies umfasst.

5. Reinigungstuch (10) nach einem der vorstehenden Ansprüche, bei dem das Basisgewicht der Bodenkontaktschicht (12) 38 g/m2 bis 45 g/m2 beträgt.

6. Reinigungstuch (10) nach einem der vorstehenden Ansprüche, **dadurch gekennzeichnet, dass** das kumulative Volumen der Bodenkontaktschicht (12) bei 204 mm $H_2O$ 2,3 bis 2,5 Kubikmillimeter pro mg Vliesmaterial beträgt.

7. Reinigungstuch (10) nach Ansprüchen 1, 2, 3, 4 und 5, **dadurch gekennzeichnet, dass** die erste Lage ein kumulatives Volum bei 204 mm $H_2O$ von 2,5 bis 2,7 Kubikmillimeter pro mg Vliesmaterial aufweist.

8. Reinigungstuch (10) nach einem der vorstehenden Ansprüche, wobei die zweite Lage ein Basisgewicht von 110 g/m2 bis 160 g/m2 aufweist.

9. Reinigungstuch (10) nach Ansprüchen 2, 3, 4, 5, 6, 7 und 8, wobei die Bodenkontaktschicht (12) und die Stützschicht (16) im Wesentlichen identische Vliesmaterialien umfassen.

10. Reinigungstuch (10) nach einem der vorstehenden Ansprüche, wobei die zweite Lage zu mindestens 50 Gewichtsprozent Cellulose umfasst.

**11.** Reinigungstuch (10) nach einem der vorstehenden Ansprüche, das vorbefeuchtet ist.

**Revendications**

**1.** Feuille de nettoyage (10) appropriée pour être préhumidifiée, ladite feuille de nettoyage (10) comprenant une première épaisseur et une deuxième épaisseur réunies dans une relation face à face pour former un stratifié, ladite première épaisseur comprenant une couche de contact avec le sol (12), ladite deuxième épaisseur comprenant un matériau synthétique non tissé et/ou cellulosique fournissant une couche centrale permettant de retenir et de libérer un liquide de nettoyage, ladite première épaisseur ayant une masse surfacique de 35 g/m$^2$ à 50 g/m$^2$, **caractérisée par** un volume cumulé à 204 mm $H_2O$ de 2 à 2,7 millimètres cubes par mg de matériau non tissé.

**2.** Feuille de nettoyage (10) selon la revendication 1, dans laquelle ladite deuxième épaisseur a une première face et une deuxième face opposée à celle-ci, et dans laquelle ladite couche de contact avec le sol (12) est disposée sur ladite première face de ladite deuxième épaisseur, et dans laquelle ladite feuille comprend en outre une couche de support de troisième épaisseur (16) disposée sur ladite deuxième face de ladite deuxième épaisseur pour former un stratifié à trois épaisseurs.

**3.** Feuille de nettoyage (10) selon les revendications 1 et 2 dans laquelle ladite couche de contact avec le sol (12) comprend un non-tissé filé-lié.

**4.** Feuille de nettoyage (10) selon la revendication 3 dans laquelle ladite couche de contact avec le sol (12) comprend un non-tissé filé-lié enchevêtré par voie hydraulique.

**5.** Feuille de nettoyage (10) selon une quelconque revendication précédente dans laquelle ladite masse surfacique de ladite couche de contact avec le sol (12) va de 38 g/m$^2$ à 45 g/m$^2$.

**6.** Feuille de nettoyage (10) selon une quelconque revendication précédente **caractérisée en ce que** le volume cumulé de ladite couche de contact avec le sol (12) à 204 mm $H_2O$ va de 2,3 à 2,5 millimètres cubes par mg de matériau non tissé.

**7.** Feuille de nettoyage (10) selon les revendications 1, 2, 3, 4 et 5 **caractérisée en ce que** ladite première épaisseur a un volume cumulé à 204 mm $H_2O$ de 2,5 à 2,7 millimètres cubes par mg de matériau non tissé.

**8.** Feuille de nettoyage (10) selon une quelconque revendication précédente dans laquelle ladite deuxième épaisseur a une masse surfacique de 110 g/m$^2$ à 160 g/m$^2$.

**9.** Feuille de nettoyage (10) selon les revendications 2, 3, 4, 5, 6, 7 et 8 dans laquelle ladite couche de contact avec le sol (12) et ladite couche de support (16) comprennent des matériaux non tissés essentiellement identiques.

**10.** Feuille de nettoyage (10) selon une quelconque revendication précédente dans laquelle ladite deuxième épaisseur comprend au moins 50 pour cent en poids de cellulose.

**11.** Feuille de nettoyage (10) selon une quelconque revendication précédente qui est préhumidifiée.

1B        1B

<u>18</u>

<u>12</u>

<u>14</u>

<u>16</u>

10

Fig. 1A

<u>18</u>

<u>12</u>

10

<u>14</u>

<u>16</u>

Fig. 1B

Fig. 2A

Fig. 2B

Fig. 3A

Fig. 3B

12

Fig 4A

Fig 4B

**EP 3 102 083 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6716805 B
- US 200702027667947613 A
- WO 2009031951 A1
- US 3341394 A
- US 3502358 A
- US 3802817 A
- US 4340563 A
- US 4919738 A
- US 6733605 B
- EP 0844062 A
- US D614408 S
- US D629211 S
- US D652633 S
- US 8250700 B
- US 8407848 B
- US D551409S S
- US D614408S S

- US 6305046 B
- US 6484346 B
- US 6651290 B
- US D487173 S
- US DES391715 A
- US D409343 S
- US D423742 S
- US D481184 S
- US D484287 S
- US D588770 S
- US 7137169 B
- US D484287S S
- US D615260S S
- US D615378S S
- US 7516508 B
- US 20130319463 A

**Non-patent literature cited in the description**

- **B. MILLER ; I. TYOMKIN.** Liquid Porosimetry: New Methodology and Applications. *The Journal of Colloid and Interface Science,* 1994, vol. 162, 163-170